# FASCICULE DE BREVET EUROPEEN

(11) **EP 2 935 945 B1**
(45) Date de publication et mention de la délivrance du brevet: **06.02.2019**
(21) Numéro de dépôt: 13811893.0
(22) Date de dépôt: 18.12.2013
(51) Int. Cl.: F16H 57/08, F16H 57/00, B60T 13/74, F16D 65/18, F16D 55/226, F16D 121/24, F16D 125/50

(54) **PORTE-SATELLITES POUR UN ACTIONNEUR ÉLECTROMÉCANIQUE DE FREIN DE STATIONNEMENT, ACTIONNEUR ET PROCÉDÉS D'ASSEMBLAGE**
PLANETENTRÄGER FÜR EINEN ELEKTROMECHANISCHEN AKTUATOR EINER PARKBREMSE, AKTUATOR UND MONTAGEVERFAHREN
PLANET CARRIER FOR AN ELECTROMECHANICAL ACTUATOR OF A PARKING BRAKE, ACTUATOR AND ASSEMBLY METHODS

(30) Priorité: 19.12.2012 FR 1262291
(43) Date de publication de la demande: 28.10.2015
(73) Titulaire: Chassis Brakes International B.V., 5656 AG Eindhoven (NL); IMS Gear SE & Co. KGaA, 78166 Donaueschingen (DE)
(72) Inventeur: BOURLON, Philippe, F-77230 Dammartin En Goele (FR)
(74) Mandataire: Brevalex
(86) Numéro de dépôt international: PCT/EP2013/077041
(87) Numéro de publication internationale: WO 2014/095966

(56) Documents cités:
- FR-A1- 2 111 638
- FR-A1- 2 853 382
- JP-A- 2003 130 143
- US-A1- 2003 178 264
- US-A1- 2004 082 420
- US-A1- 2006 293 142
- US-A1- 2012 196 720

## Description

### DOMAINE TECHNIQUE DE L'INVENTION

La présente invention se rapporte à un porte-satellites pour un train épicycloïdal d'un mécanisme réducteur d'un actionneur électromécanique pour l'actionnement d'un frein de stationnement de véhicule automobile, pouvant aussi faire fonction de frein d'urgence ou de secours, intégré à un frein à disque à actionnement hydraulique.

L'invention se rapporte aussi à un actionneur électromécanique pour l'actionnement d'un frein de stationnement de véhicule automobile qui comporte un mécanisme réducteur intégrant un tel porte-satellites.

L'invention se rapporte encore un procédé d'assemblage d'un tel porte-satellites.

### ETAT DE LA TECHNIQUE

On connaît, notamment du document US-B2-7,021,415, la structure d'un frein à disque à commande hydraulique comportant un frein de stationnement électromécanique.

De manière connue, le frein comporte un étrier apte à supporter et à guider en coulissement deux patins opposés de frottement aptes à coopérer avec un disque tournant.

Indépendamment de l'actionnement hydraulique principal du frein à disque, celui-ci comporte des moyens électromécaniques pour son actionnement et son fonctionnement en frein de stationnement ou en frein de secours.

A cet effet, le frein comporte un couple ou groupe vis-écrou qui est agencé dans le piston de frein à actionnement hydraulique et, d'autre part, un ensemble moto-réducteur électrique appelé actionneur électromécanique pour l'entraînement en rotation, dans les deux sens, de la vis du groupe vis-écrou.

L'actionnement du frein de stationnement au moyen d'un moteur électrique appartenant à cet actionneur nécessite d'appliquer à la vis du groupe vis-écrou un couple de vissage très important qui est converti par le groupe vis-écrou en une poussée axiale de serrage appliquée au piston elle-même de valeur très importante, par exemple de l'ordre de deux tonnes.

Pour produire un tel couple de vissage, sous une faible course angulaire de rotation de la vis, tout en utilisant un moteur électrique d'entraînement de dimensions les plus réduites possibles, il est nécessaire, dans l'actionneur, de disposer d'un mécanisme réducteur, qui est entraîné en rotation par l'arbre de sortie du moteur, pour entraîner en rotation un organe de sortie de l'actionneur électromécanique.

Parmi les différentes conceptions d'un tel mécanisme réducteur, et notamment parmi les mécanismes réducteurs à engrenages, on connaît différentes solutions faisant appel à au moins un étage de réduction comportant un train épicycloïdal.

L'étage de réduction à train épicycloïdal comporte un porte-satellites qui porte un ou plusieurs pignons satellites dont chacun engrène avec une couronne solaire, dentée intérieurement, fixe appartenant au boîtier de l'actionneur, qui peut aussi loger le moteur électrique.

Dans cette conception, le porte-satellites constitue l'organe de sortie de l'actionneur électromécanique qui entraîne en rotation, directement ou indirectement, la vis du groupe vis-écrou, tandis que le moteur électrique entraîne directement ou indirectement le pignon solaire central qui engrène avec les pignons satellites du train épicycloïdal.

Du fait des valeurs très élevées de charges appliquées aux différents composants du mécanisme réducteur, et notamment du train épicycloïdal et du fait de l'application "quasi instantanée" de ces charges, l'ensemble des composants de l'actionneur électromécanique, et notamment les différents composants du train épicycloïdal, sont soumis à des efforts très importants de choc(s) sous charge et il est nécessaire de prévoir des moyens d'amortissement ou d'absorption des efforts par déformation élastique.

Parmi les solutions connues, notamment illustrées dans le document US-B2-7,021,415, il peut être fait appel à une courroie crantée pour relier en rotation le pignon de sortie du moteur électrique au train épicycloïdal.

Il est aussi connu de monter la couronne solaire du train épicycloïdal dans le boîtier de l'actionneur électromécanique avec interposition de moyens déformables élastiquement.

Ces deux solutions ont notamment pour inconvénient d'augmenter l'encombrement global de l'actionneur électromécanique et du boîtier qui loge les différents composants de l'actionneur, et aussi en conséquence la masse non suspendue.

Or, toutes les dimensions d'un tel actionneur électromécanique, et notamment selon les directions radiales par rapport aux axes parallèles de rotation du moteur électrique et du train épicycloïdal nuisent au dimensionnement général du frein à disque qui doit être intégré au moins pour partie à l'intérieur de la roue dont il assure le freinage.

Le document US2003/0178264 décrit un actionneur de frein à disque électromécanique comportant un réducteur muni d'un porte-satellite. Ce document divulgue un porte-satellites selon le préambule de la revendication 1 et un procédé d'assemblage d'un porte-satellites selon le préambule de la revendication 13.

La présente invention vise à apporter une solution à ce problème et à remédier aux inconvénients qui viennent d'être mentionnés.

### RESUME DE L'INVENTION

Dans ce but, l'invention propose un porte-satellites, pour un train épicycloïdal d'un mécanisme réducteur d'un actionneur électromécanique pour l'actionnement d'un frein de stationnement de véhicule automobile, qui porte des pignons satellites dont chacun :
- est logé entre deux plaques support parallèles appartenant à une armature du porte-satellites;
- et est monté à rotation sur le porte-satellites autour d'un axe de guidage en rotation qui est monté entre les deux plaques support auxquelles il est relié par ses deux extrémités axiales opposées,
   dans lequel chaque axe de guidage est un axe tubulaire, caractérisé en ce que l'armature est une armature réalisée par moulage en matière plastique.

Selon d'autres caractéristiques du porte-satellites:
- l'armature est une armature réalisée par moulage en plusieurs parties;
- chaque axe tubulaire de guidage :
   -- s'étend axialement à travers les deux plaques support ;
   -- comporte une première extrémité axiale munie d'une collerette radiale de butée qui est en appui axial contre une portion en vis-à-vis de la face externe d'une première des deux plaques support ; et
   -- comporte une deuxième extrémité axiale qui est immobilisée axialement par rapport à la deuxième des deux plaques support ;
- la deuxième extrémité axiale est immobilisée axialement par rapport à la deuxième plaque support par au moins une zone sertie de cette deuxième extrémité axiale qui s'étend radialement vers l'extérieur en regard d'une portion en vis-à-vis de la face externe de la deuxième plaque support ;
- chaque axe tubulaire de guidage en rotation est en acier, la longueur axiale de chaque axe tubulaire de guidage en rotation est comprise entre 5 et 20 mm, le diamètre extérieur de chaque axe tubulaire de guidage en rotation est compris entre 5 et 15 mm, et l'épaisseur radiale de chaque axe tubulaire de guidage en rotation est comprise entre 0,5 et 2 mm ;
- la longueur axiale de chaque axe tubulaire de guidage en rotation est comprise entre 12 et 18 mm, le diamètre extérieur de chaque axe tubulaire de guidage en rotation est compris entre 7 et 10 mm, et l'épaisseur radiale de chaque axe tubulaire de guidage en rotation est comprise entre 0,6 et 1 mm ;
- la deuxième extrémité axiale est immobilisée axialement par rapport à la deuxième plaque support par au moins deux zone serties, diamétralement opposées, de la deuxième extrémité axiale dont chacune s'étend radialement vers l'extérieur en regard d'une portion en vis-à-vis de la face externe de la deuxième plaque support ;
- chaque axe tubulaire de guidage en rotation est rempli d'un élément déformable élastiquement ;
- le porte-satellites comporte quatre satellites répartis angulairement de manière régulière autour d'un axe de rotation du porte-satellites.

L'invention propose aussi un actionneur électromécanique, pour l'actionnement d'un frein de stationnement de véhicule automobile, qui comporte un boîtier d'actionneur dans lequel sont logés, au moins en partie :
- un moteur électrique comportant un arbre moteur de sortie ; et
- un mécanisme réducteur à engrenages qui est entraîné en rotation par l'arbre de sortie du moteur pour entraîner en rotation un organe de sortie de l'actionneur
et dans lequel le mécanisme réducteur comprend au moins un étage de réduction comportant un train épicycloïdal ayant un porte-satellites selon l'invention.

Selon d'autres caractéristiques de l'actionneur :
- le porte-satellites constitue l'organe de sortie de l'actionneur ;
- un axe de rotation du porte-satellites est décalé radialement par rapport à un axe de rotation de l'arbre de sortie du moteur.

L'invention propose encore un procédé d'assemblage d'un porte-satellites, pour un train épicycloïdal d'un mécanisme réducteur d'un actionneur électromécanique pour l'actionnement d'un frein de stationnement de véhicule automobile, qui porte des pignons satellites dont chacun
- est logé entre deux plaques support parallèles appartenant à une armature du porte-satellites ;
- et est monté à rotation sur le porte-satellites autour d'un axe tubulaire de guidage en rotation qui est monté entre les deux plaques support auxquelles il est relié par ses deux extrémités axiales opposées,
caractérisé en ce qu'il comporte les étapes consistant successivement à :
- réaliser par moulage en matière plastique ladite armature de porte-satellites ;
- introduire au moins un satellite entre les deux plaques support ;
- insérer axialement un axe tubulaire de guidage successivement à travers une première des deux plaques support, le satellite et la deuxième des deux plaques support ;
- immobiliser axialement l'axe tubulaire de guidage par rapport aux deux plaques support.

Pour l'assemblage d'un porte-satellites dont chaque axe tubulaire de guidage :
-- s'étend axialement à travers les deux plaques support ;
-- comporte une première extrémité axiale munie d'une collerette radiale de butée qui est en appui axial contre une portion en vis-à-vis de la face externe d'une première des deux plaques support ; et
-- comporte une deuxième extrémité axiale qui est immobilisée axialement par rapport à la deuxième des deux plaques support, l'étape d'insertion axiale du procédé se termine par la venue en appui axial de la collerette radiale de butée contre la portion en vis-à-vis de la face externe de la première plaque support.

L'étape d'immobilisation consiste à immobiliser la deuxième extrémité axiale de l'axe tubulaire de guidage par rapport à la deuxième plaque support, par sertissage d'au moins une portion de cette deuxième extrémité axiale, radialement vers l'extérieur en regard d'une portion en vis-à-vis de la face externe de la deuxième plaque support.

La présente invention propose encore un procédé d'assemblage d'un frein de véhicule automobile, caractérisé en ce qu'il comporte les étapes consistant à :
- assembler un porte-satellites selon le procédé ci-dessus ;
- réaliser un actionneur électromécanique selon invention comportant un porte-satellites ainsi assemblé ;
- fixer ledit actionneur électromécanique ainsi réalisé sur une face arrière d'un étrier de frein à disque comportant un frein de stationnement à actionnement électromécanique.

### BREVE DESCRIPTION DES FIGURES

D'autres caractéristiques et avantages de l'invention apparaîtront à la lecture de la description détaillée qui va suivre d'un exemple de réalisation de l'invention pour laquelle on se reportera aux dessins annexés dans lesquels :
- la figure 1 est une vue générale en perspective d'un frein à disque à frein de stationnement comportant un actionneur électromécanique selon l'invention ;
- la figure 2 est une vue analogue à celle de la figure 1 qui représente les principaux composants du frein de la figure 1 en éclaté ;
- la figure 3A est une vue en perspective à grande échelle du boîtier de l'actionneur électromécanique représenté aux figures 1 et 2 ;
- la figure 3B est une vue en perspective du boîtier représenté à la figure 3A ;
- la figure 4 est une vue en perspective d'un porte-satellites selon l'invention ;
- la figure 5 est une vue en perspective, selon un autre angle, du porte-satellites de la figure 4 ;
- la figure 6 est une vue en perspective éclatée des principaux composants du porte-satellites de la figure 4 ;
- la figure 7 est une vue en perspective à grande échelle de l'armature à plaques support du porte-satellites de la figure 4 ;
- la figure 8 est une vue à grande échelle, en coupe axiale par un plan passant par les axes de rotation de deux satellites diamétralement opposés, du porte-satellites de la figure 4 ;
- les figures 9A et 9B sont deux vues en perspective à grande échelle qui représentent un axe tubulaire de guidage en rotation d'un porte-satellites avant assemblage du porte-satellites et après assemblage du porte-satellites ;
- la figure 10 est une vue isométrique d'une variante de réalisation d'un porte-satellites selon l'invention

### DESCRIPTION DETAILLEE DES FIGURES

Dans la description qui va suivre, des éléments et composants identiques, analogues, ou similaires seront désignés par les mêmes références.

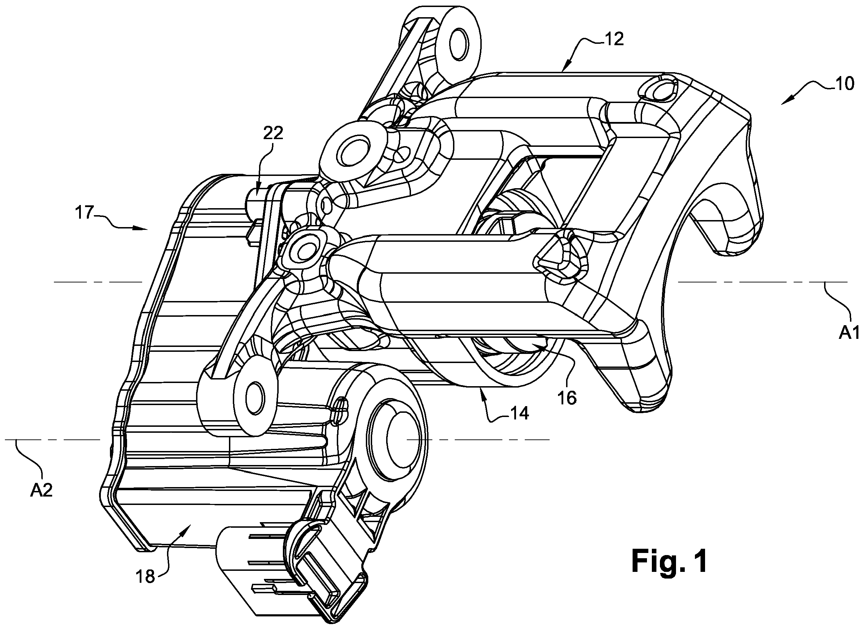

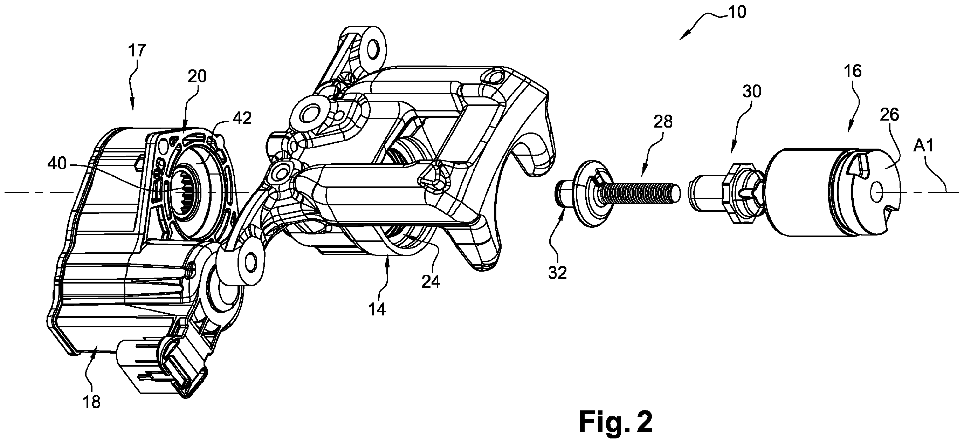

On a représenté aux figures 1 et 2, un frein à disque 10 qui est représenté ici sans ses patins de freins, ni sans les moyens associés de guidage en coulissement axial et de rappel de ces patins.

Le frein à disque est constitué pour l'essentiel d'un étrier 12 comportant un boîtier arrière 14 dans lequel un piston hydraulique de frein 16 est monté coulissant axialement d'arrière en avant, c'est-à-dire de la gauche vers la droite en considérant la figure 1, selon un axe A1.

Le frein à disque 10 comporte, à l'arrière, un groupe moto-réducteur ou actionneur électromécanique 17 dont on a représenté un boîtier 18 qui, comme cela sera expliqué en détail par la suite, loge un moteur électrique et un mécanisme réducteur à engrenages à train épicycloïdal.

Le boîtier 18 est rapporté et fixé sur une face transversale arrière de l'étrier 12 contre laquelle le boîtier 18 est en appui axial par sa face transversale ouverte d'extrémité avant 20, la fixation étant ici assurée pas des vis 22.

Le boîtier arrière 14 de l'étrier 12 délimite une cavité axiale hydraulique 24 dans laquelle le piston 16 est monté coulissant axialement de manière étanche dans les deux sens, selon l'axe A1.

Le piston de frein 16 est une pièce en forme générale de pot cylindrique ouvert axialement vers l'arrière et il est apte à coopérer, par sa face transversale externe avant 26, avec un patin de frein à disque associé (non représenté).

De manière connue, l'alimentation en fluide hydraulique sous pression de la chambre 24 provoque un actionnement hydraulique du frein par poussée axiale vers l'avant du piston 16 par rapport au boîtier arrière 14 de l'étrier 12.

De manière connue, pour l'actionnement mécanique du piston 16 en fonctionnement dit de stationnement ou de "parking", ou encore en fonctionnement de frein de secours, le piston 16 et la chambre 24 logent un groupe vis-écrou comportant une vis arrière d'entraînement 28 et un écrou avant 30 de poussée axiale.

Pour son entraînement en rotation dans les deux sens, la vis 28 comporte un tronçon arrière 32 qui, en position assemblée, est accessible depuis la face transversale arrière de l'étrier 12 de manière à constituer une tête d'entraînement en rotation de la vis 28 qui est entraînée en rotation dans les deux sens par un organe de sortie de mouvement de l'actionneur électromécanique 17.

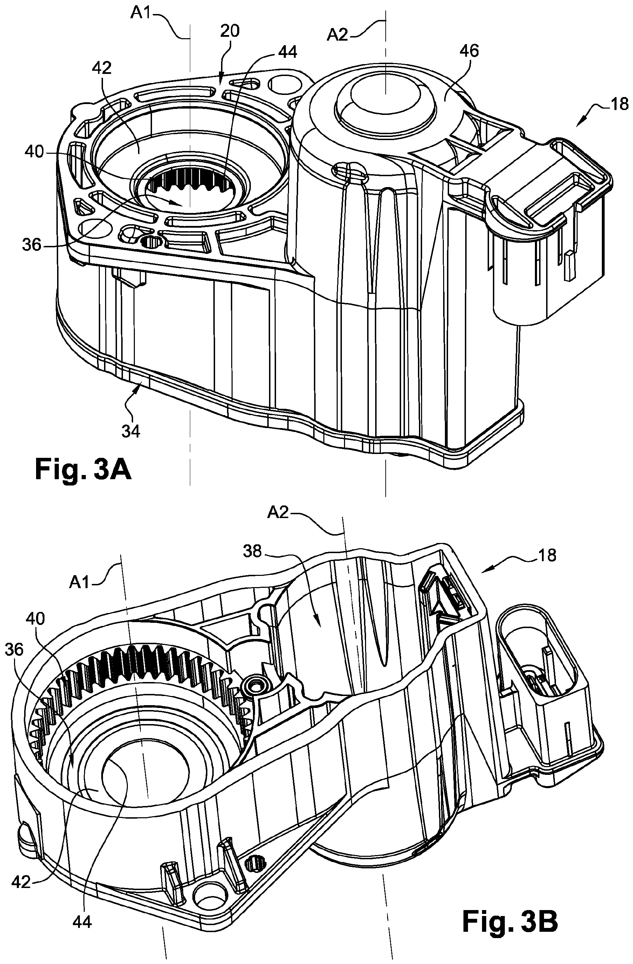

Comme on peut le voir aux figures 3A et 3B, le boîtier 18 est une pièce moulée en matière plastique qui délimite intérieurement deux logements principaux, chacun en forme générale de pot cylindrique, d'axes parallèles A1 et A2.

Le boîtier 18 est fermé par un couvercle arrière 34 rapporté et soudé ou collé.

Avant la mise en place du couvercle 34, les deux logements 36 et 38 sont ouverts axialement vers l'arrière.

Le premier logement 36, à gauche en considérant les figures 3A et 3B, est prévu pour loger un train épicycloïdal dont une couronne solaire extérieure dentée intérieurement 40 est ici réalisée venue de matière par moulage avec le boîtier 18.

Le premier logement 36 est fermé axialement vers l'avant par une paroi annulaire de fond 42.

La paroi annulaire de fond 42 comporte un trou central 44 pour le passage de l'organe de sortie de mouvement du train épicycloïdal.

Le deuxième logement 38, de droite, en considérant les figures, est lui aussi ouvert axialement vers l'arrière et il est conçu pour loger un moteur électrique d'entraînement (non représenté) dont le pignon de sortie est relié, par des moyens à engrenages non représentés, au pignon solaire du train épicycloïdal logé dans le premier logement 36.

Le deuxième logement 38 qui loge le moteur électrique est fermé axialement vers l'avant par une paroi de fond 46.

Grâce à la conception selon l'invention, et comme on peut le voir notamment à la figure 1, la conception générale de l'actionneur électromécanique 17 avec son boîtier 18 est particulièrement compacte, d'une longueur axiale réduite vers l'arrière à partir de la face transversale arrière de l'étrier et avec une partie axiale avant importante du boîtier qui loge le moteur électrique qui s'étend axialement, selon l'axe A2 de rotation du moteur, vers l'avant au-delà de la face transversale arrière de l'étrier et le long du boîtier 14.

On décrira maintenant en détails le porte-satellites 50 selon l'invention qui, en position assemblée, est logé dans le premier logement 36.

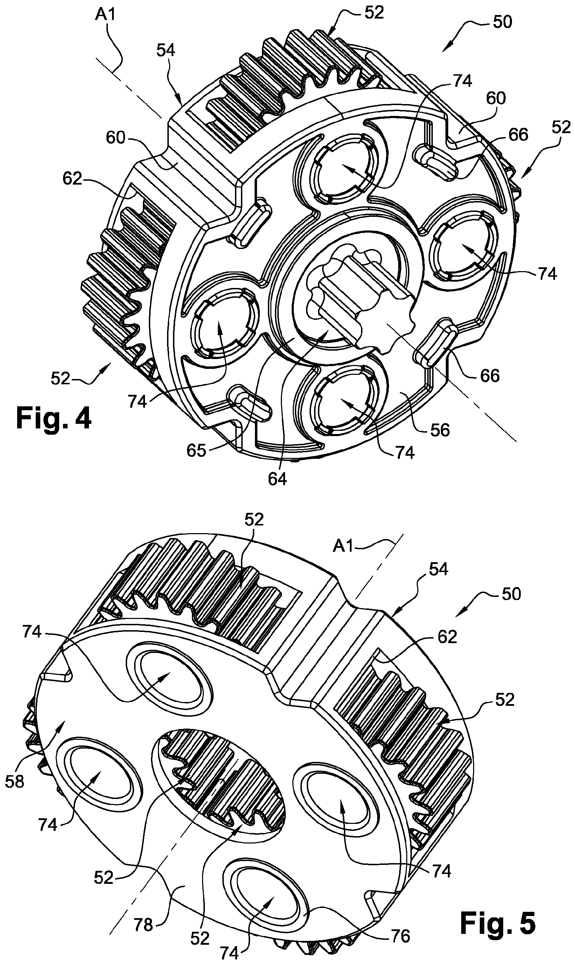

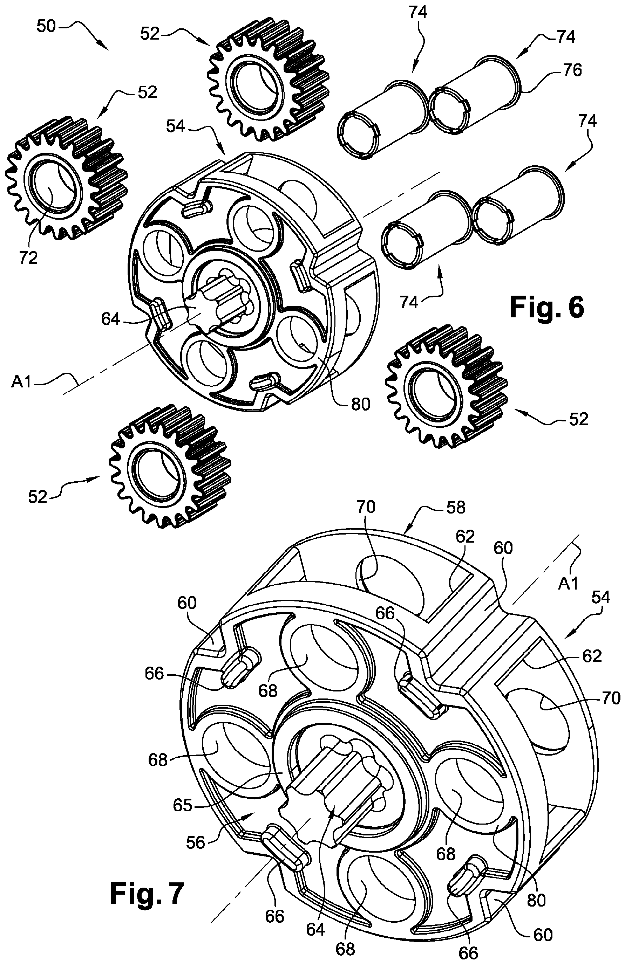

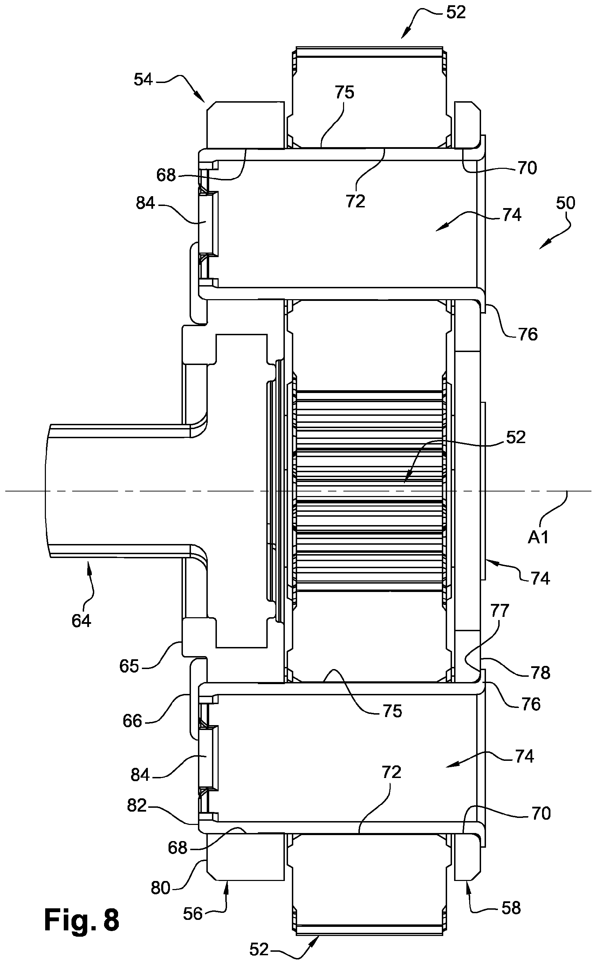

A titre non limitatif, le porte-satellites 50 représenté aux figures 4 à 8 est ici un porte-satellites 50 à quatre pignons satellites 52 répartis angulairement de manière régulière autour de l'axe principal A1 du porte-satellites 50.

Le porte-satellites 50 comporte une armature 54 en forme générale de "cage" qui loge et porte à rotation les satellites 52.

L'armature 54 est constituée pour l'essentiel par deux plaques support parallèles dont une plaque avant 56 et une plaque support arrière 58.

Les deux plaques support parallèles 56 et 58 s'étendent dans des plans perpendiculaires à l'axe A1 et elles sont reliées axialement entre elles par des traverses axiales 60, formant entretoises entre les plaques support 56 et 58, qui sont ici au nombre de quatre et qui sont réparties angulairement de manière régulière à la périphérie radiale des plaques support 56 et 58.

Les traverses 60 délimitent angulairement entre elles quatre fenêtres périphériques 62 à travers chacune desquelles fait saillie radialement un pignon satellite 52 pour engrener avec la couronne solaire 40.

L'armature 54 en forme de cage porte-satellites est par exemple réalisée en matière plastique moulée en plusieurs parties.

La plaque support avant 56 porte centralement un pignon de sortie de mouvement 64 qui fait saillie axialement vers l'avant qui est solidaire de l'armature 54.

La face externe de la plaque support avant 56 comporte une collerette annulaire centrale 65 de centrage du porte-satellites 50 dans le logement 36 du boîtier 18 qui, en position montée du train épicycloïdal, est centrée dans le trou 44 de la paroi de fond 42.

La face externe comporte aussi quatre plots 66 d'appui axial vers l'avant du porte-satellites contre une portion en vis-à-vis de la face interne de la paroi de fond 42 du premier logement 36.

En position montée du porte-satellites 50, les pignons satellites 52 engrènent avec la couronne solaire 40 du premier logement 36 du boîtier 18.

Au voisinage de sa périphérie, la plaque support avant 56 comporte quatre trous axiaux débouchants 68 répartis angulairement de manière régulière.

De la même manière, la plaque support arrière 58 comporte quatre trous axiaux débouchants 70, les trous axiaux 68 et 70 étant alignés axialement par paires.

Les diamètres intérieurs des trous 68 et 70 sont ici égaux.

Chaque pignon satellite 52 comporte un alésage interne 72 pour son montage à rotation par rapport à l'armature 54 du porte-satellites 50, au moyen d'un axe, ou arbre 74, de guidage en rotation associé.

Chaque pignon satellite 52 est monté par rapport à l'armature 54 à la manière d'un montage en chape entre les faces internes en vis-à-vis des deux plaques support avant 56 et arrière 58 au moyen d'un axe de guidage associé 74 qui s'étend axialement à travers une paire de trous alignés 68 et 70 et à travers l'alésage interne 72 du pignon satellite 52.

Conformément à l'invention, chaque axe 74 est un élément tubulaire réalisé à partir d'un tronçon de tube d'acier d'épaisseur radiale constante.

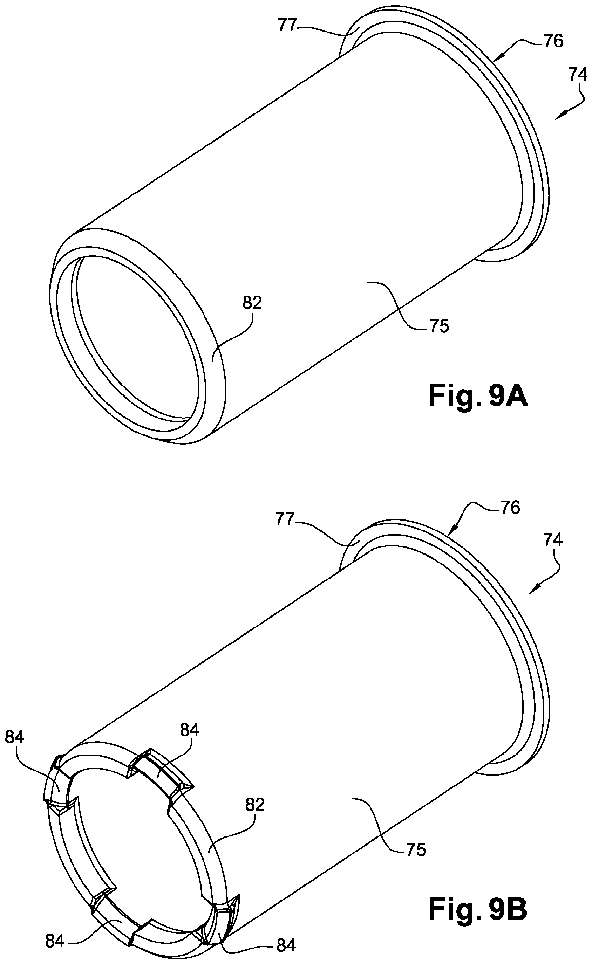

Comme on peut le voir aux figures, et notamment à la figure 9A, chaque axe tubulaire 74 comporte, à son extrémité axiale arrière, une collerette 76 qui s'étend radialement vers l'extérieur.

La collerette 76 est une collerette de butée qui, en position montée, détermine la position axiale de l'axe tubulaire 74 par rapport à l'armature 54.

A cet effet, une face avant 77 de la collerette de butée 76 est en appui axial vers l'avant contre la portion en vis-à-vis de la face externe 78 de la plaque support arrière 58.

Le tronçon d'extrémité axiale avant de chaque axe tubulaire 74 s'étend axialement à travers le trou associé 68 de la plaque support avant 56 de telle manière que son extrémité axiale avant 82 fasse saillie axialement au-delà de la face externe 80 de la plaque support avant 56 qui entoure le trou associé 68.

Pour son immobilisation axiale par rapport à l'armature 54, chaque axe tubulaire 74 est ici fixé au moyen de quatre portions serties 84 de son extrémité axiale avant 82.

Chaque portion sertie 84 est réalisée par déformation plastique, au moyen d'un outillage de sertissage non représenté, et elle est déformée radialement vers l'extérieur pour s'étendre en regard de la portion en vis-à-vis de la surface externe 80.

Du fait de sa conception tubulaire, et par comparaison avec un axe, ou arbre, de guidage en rotation métallique plein, chaque axe tubulaire 74 présente, sous charge, une capacité à se déformer élastiquement temporairement de manière à constituer un moyen déformable élastiquement d'absorption des chocs de charges et notamment des chocs de couple auxquels est soumis le mécanisme réducteur, et notamment les composants du train épicycloïdal.

L'assemblage ou montage des différents composants du porte-satellites 50 s'effectue de la manière suivante.

Chaque pignon satellite 52 est introduit radialement à l'intérieur de l'armature 54 à travers une fenêtre 62 en alignant son alésage interne 72 avec une paire de trous alignés 68 et 70.

On introduit ensuite un axe tubulaire 74, dans sa conformation initiale telle que représentée à la figure 9A dans laquelle son extrémité axiale avant 82 est lisse et non déformée, successivement et axialement à travers un trou 70, un alésage 72 et un trou 68.

On termine l'opération de montage et d'assemblage d'un pignon satellite 52 avec son axe tubulaire 74 de guidage en rotation en effectuant l'opération de sertissage pour la réalisation des parties serties déformées 84, en s'assurant que l'opération de sertissage ne provoque pas de déformation de l'axe tubulaire 74, notamment afin que la surface périphérique 75 de son tronçon central conserve sa cylindricité pour le guidage en rotation du pignon satellite associé 52.

L'invention n'est pas limitée au mode de réalisation qui vient d'être décrit.

A titre de variante non représentée, le nombre de pignons satellites peut être différent de quatre.

De même, le nombre des portions serties 84 peut être différent de quatre.

Pour maîtriser les caractéristiques de déformation élastique sous charge et d'absorption de chaque axe tubulaire, celui-ci peut, à titre de variante non représentée, être rempli d'un élément déformable élastiquement, par exemple en matériau élastomère.

Dans le même but, chaque axe tubulaire de guidage en rotation peut être réalisé sous la forme d'un montage concentrique de deux pièces tubulaires, dit montage "compound", le tube ou élément tubulaire intérieur pouvant être continu ou fendu axialement.

L'invention n'est pas non plus limitée aux moyens qui viennent d'être décrits et représentés pour le montage et l'immobilisation axiale et en rotation de chaque axe tubulaire de guidage par rapport à l'armature du porte-satellites.

Par exemple, les portions serties 84 peuvent être remplacées par une collerette radiale analogue à la collerette radiale 76, réalisée par repoussage.

En fonction des dimensionnements et des efforts, chaque axe tubulaire 74 peut aussi être fixé et immobilisé axialement par emmanchement à force de ses deux tronçons opposés d'extrémité axiale dans des trous associés des deux plaques support avant et arrière.

Sans sortir du cadre de l'invention, chaque plaque support avant et/ou arrière peut ne pas être "pleine", mais être par exemple réalisée sous la forme d'une structure à bras radiaux agencés en étoile.

A titre d'exemple, dans le mode de réalisation représenté aux figures, chaque axe tubulaire 74 est avantageusement réalisé en acier, par exemple en tôle d'acier de préférence XES ou XS, ou avantageusement en acier à ressort par exemple en acier XC70.

La mise en oeuvre d'une armature 54 en matière plastique moulée permet d'assurer le positionnement précis de satellites, de préférence sans avoir recours à un usinage.

Avantageusement les deux plaques support parallèles 56 et 58 forment une pièce unique moulée améliorant encore la précision, et par suite le rendement mécanique du groupe motoréducteur.

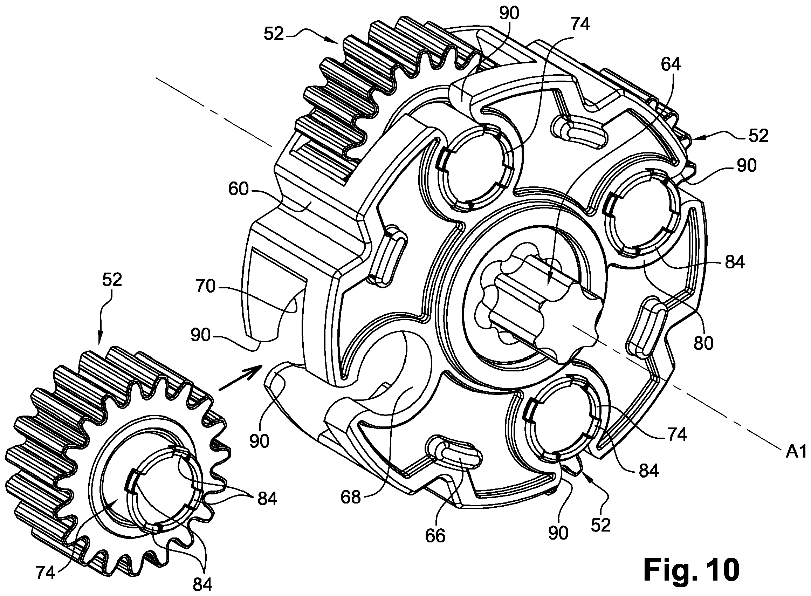

Dans l'exemple illustré à la figure 10, l'armature 54 comporte des passages 90 vers les paires de trous alignés 68 et/ou 70 dont la largeur est inférieure au diamètre externe des axes tubulaires 74, permettant l'introduction à force des axes tubulaires 74, perpendiculairement à l'axe A1 de l'armature 54, par emboîtement élastique, c'est-à-dire par déformation élastique des bords des passages 90 lors de l'introduction radiale de chaque axe 74. Dans l'exemple représenté à la figure 10, trois des satellites sont en place, tandis qu'un satellite n'a pas encore été introduit dans sa position fonctionnelle.

Cette possibilité de montage par emboîtement selon la direction radiale permet de réaliser préalablement chaque sous-ensemble axe 74 - pignon 52 par sertissage des portions serties 84.

## Revendications

1. Porte-satellites (50), pour un train épicycloïdal d'un mécanisme réducteur d'un actionneur électromécanique (17) pour l'actionnement d'un frein de stationnement de véhicule automobile, qui porte des pignons satellites (52) dont chacun :
- est logé entre deux plaques support parallèles (56, 58) appartenant à une armature (54) du porte-satellites ;
- et est monté à rotation sur le porte-satellites (50) autour d'un axe (74) de guidage en rotation qui est monté entre les deux plaques support (56, 58) auxquelles il est relié par ses deux extrémités axiales opposées, chaque axe (74) de guidage en rotation étant un axe tubulaire,
**caractérisé en ce que** l'armature (54) est une armature réalisée par moulage en matière plastique.

2. Porte-satellites selon la revendication 1, **caractérisé en ce que** l'armature (54) est une armature réalisée par moulage en plusieurs parties.

3. Porte-satellites selon l'une des revendications 1 ou 2, **caractérisé en ce que** chaque axe tubulaire (74) de guidage en rotation :
- s'étend axialement à travers les deux plaques support (56, 58) ;
- comporte une première extrémité axiale munie d'une collerette radiale (76) de butée qui est en appui axial contre une portion en vis-à-vis de la face externe (78) d'une première (58) des deux plaques support ; et
- comporte une deuxième extrémité axiale (82) qui est immobilisée axialement par rapport à la deuxième (56) des deux plaques support.

4. Porte-satellites selon la revendication 3, **caractérisé en ce que** la deuxième extrémité axiale (82) est immobilisée axialement par rapport à la deuxième plaque support (56) par au moins une zone sertie (84) de cette deuxième extrémité axiale (82) qui s'étend radialement vers l'extérieur en regard d'une portion en vis-à-vis de la face externe (80) de la deuxième plaque support (56).

5. Porte-satellites selon la revendication 3 ou 4, **caractérisé en ce que** la deuxième extrémité axiale (82) est immobilisée axialement par rapport à la deuxième plaque support (56) par au moins deux zones serties (84), diamétralement opposées, de la deuxième extrémité axiale (82) dont chacune s'étend radialement vers l'extérieur en regard d'une portion en vis-à-vis de la face externe (80) de la deuxième plaque support (56).

6. Porte-satellites selon l'une quelconque des revendications 1 à 5, **caractérisé en ce que** chaque axe tubulaire (74) de guidage en rotation est en acier, **en ce que** la longueur axiale de chaque axe tubulaire de guidage en rotation est comprise entre 5 et 20 mm, **en ce que** le diamètre extérieur de chaque axe tubulaire de guidage en rotation est compris entre 5 et 15 mm, et **en ce que** l'épaisseur radiale de chaque axe tubulaire de guidage en rotation est comprise entre 0,5 et 2 mm.

7. Porte-satellites selon la revendication 6, **caractérisé en ce que** la longueur axiale de chaque axe tubulaire de guidage en rotation est comprise entre 12 et 18 mm, **en ce que** le diamètre extérieur de chaque axe tubulaire de guidage en rotation est compris entre 7 et 10 mm, et **en ce que** l'épaisseur radiale de chaque axe tubulaire de guidage en rotation est comprise entre 0,6 et 1 mm.

8. Porte-satellites selon l'une quelconque des revendications précédentes, **caractérisé en ce que** chaque axe tubulaire (74) de guidage en rotation est rempli d'un élément déformable élastiquement.

9. Porte-satellites selon l'une des revendications 1 ou 2, **caractérisé en ce qu'**il comporte quatre satellites (52) répartis angulairement de manière régulière autour d'un axe (A1) de rotation du porte-satellites (50).

10. Actionneur électromécanique (17), pour l'actionnement d'un frein de stationnement de véhicule automobile, qui comporte un boîtier d'actionneur (18) dans lequel sont logés, au moins en partie :
- un moteur électrique comportant un arbre moteur de sortie ; et
- un mécanisme réducteur à engrenages qui est entraîné en rotation par l'arbre de sortie du moteur pour entraîner en rotation un organe de sortie (64) de l'actionneur
et **caractérisé en ce que** le mécanisme réducteur comprend au moins un étage de réduction comportant un train épicycloïdal ayant un porte-satellites (50)selon l'une quelconque des revendications 1 à 9.

11. Actionneur électromécanique selon la revendication 10, **caractérisé en ce que** le porte-satellites (50) constitue l'organe de sortie de l'actionneur.

12. Actionneur électromécanique selon la revendication 10, **caractérisé en ce qu'**un axe (A1) de rotation du porte-satellites (50) est décalé radialement par rapport à un axe (A2) de rotation de l'arbre de sortie du moteur.

13. Procédé d'assemblage d'un porte-satellites, pour un train épicycloïdal d'un mécanisme réducteur d'un actionneur électromécanique pour l'actionnement d'un frein de stationnement de véhicule automobile, qui porte des pignons satellites (52) dont chacun
- est logé entre deux plaques support parallèles (56, 58) appartenant à une armature (54) du porte-satellites ;
- et est monté à rotation sur le porte-satellites autour d'un axe tubulaire de guidage en rotation (74) qui est monté entre les deux plaques support auxquelles il est relié par ses deux extrémités axiales opposées,
**caractérisé en ce qu'**il comporte les étapes consistant successivement à :
- réaliser par moulage en matière plastique ladite armature (54) de porte-satellites ;
- introduire au moins un satellite (52) entre les deux plaques support (56, 58);
- insérer axialement un axe tubulaire de guidage en rotation successivement à travers une première des deux plaques support, le satellite et la deuxième des deux plaques support ;
- immobiliser axialement l'axe tubulaire (74) de guidage en rotation par rapport aux deux plaques support (56, 58).

14. Procédé d'assemblage selon la revendication 13, d'un porte-satellites dont chaque axe tubulaire (74) de guidage en rotation :
- s'étend axialement à travers les deux plaques support (56, 58) ;
- comporte une première extrémité axiale munie d'une collerette radiale de butée (76) qui est en appui axial contre une portion en vis-à-vis de la face externe (78) d'une première (58) des deux plaques support (56, 58) ; et
- comporte une deuxième extrémité axiale (82) qui est immobilisée axialement par rapport à la deuxième (56) des deux plaques support,
l'étape d'insertion axiale se terminant par la venue en appui axial de la collerette radiale de butée (76) contre la portion en vis-à-vis de la face externe (78) de la première plaque support (58).

15. Procédé d'assemblage selon la revendication 14, **caractérisé en ce que** l'étape d'immobilisation consiste à immobiliser la deuxième extrémité axiale (82) de l'axe tubulaire (74) de guidage en rotation par rapport à la deuxième plaque support (56), par sertissage d'au moins une portion (84) de cette deuxième extrémité axiale (82), radialement vers l'extérieur en regard d'une portion en vis-à-vis de la face externe (80) de la deuxième plaque support.

16. Procédé d'assemblage d'un frein de véhicule automobile, **caractérisé en ce qu'**il comporte les étapes consistant à :
- assembler un porte-satellites (50) selon le procédé conforme à l'une quelconque des revendications 13 à 15 ;
- réaliser un actionneur électromécanique (17) selon l'une quelconque des revendications 10 à 12 comportant un porte-satellites ainsi assemblé ;
- fixer ledit actionneur électromécanique (17) ainsi réalisé sur une face arrière d'un étrier (12) de frein à disque (10) comportant un frein de stationnement à actionnement électromécanique.

## Patentansprüche

1. Satellitenträger (50) für einen Umlaufgetriebezug eines Reduziermechanismus eines elektromechanischen Betätigungselements (17) zur Betätigung einer Parkbremse eines Automobilfahrzeugs, der Planetenräder (52) trägt, von denen jedes:
- zwischen zwei parallelen Tragplatten (56, 58) untergebracht ist, die zu einer Armatur (54) des Satellitenträgers gehören;
- und drehbar an dem Satellitenträger (50) um eine Drehführungsachse (74) montiert ist, die zwischen den zwei Tragplatten (56, 58) montiert ist, mit denen sie mit ihren zwei entgegengesetzten axialen Enden verbunden ist, wobei jede Drehführungsachse (74) eine rohrförmige Achse ist,
**dadurch gekennzeichnet, dass** die Armatur (54) eine durch Formen aus Kunststoff realisierte Armatur ist.

2. Satellitenträger nach Anspruch 1, **dadurch gekennzeichnet, dass** die Armatur (54) eine durch Formen aus mehreren Teilen realisierte Armatur ist.

3. Satellitenträger nach einem der Ansprüche 1 oder 2, **dadurch gekennzeichnet, dass** jede rohrförmige Drehführungsachse (74):
- sich axial durch die zwei Tragplatten (56, 58) hindurch erstreckt;
- ein erstes axiales Ende umfasst, das mit einem radialen Anschlagkragen (76) ausgestattet ist, der in axialer Anlage gegen einen gegenüberliegenden Bereich der Außenfläche (78) einer ersten (58) von den zwei Tragplatten ist; und
- ein zweites axiales Ende (82) umfasst, das axial bezüglich der zweiten (56) von den zwei Tragplatten immobilisiert ist.

4. Satellitenträger nach Anspruch 3, **dadurch gekennzeichnet, dass** das zweite axiale Ende (82) axial bezüglich der zweiten Tragplatte (56) immobilisiert ist durch wenigstens eine Presszone (84) dieses zweiten axialen Endes (82), die sich radial nach außen gegenüber einem gegenüberliegenden Bereich der Außenfläche (80) der zweiten Tragplatte (56) erstreckt.

5. Satellitenträger nach Anspruch 3 oder 4, **dadurch gekennzeichnet, dass** das zweite axiale Ende (82) axial bezüglich der zweiten Tragplatte (56) immobilisiert ist durch wenigstens zwei diametral entgegengesetzte Presszonen (84) des zweiten axialen Endes (82), von denen sich jede radial nach außen gegenüber einem gegenüberliegenden Bereich der Außenfläche (80) der zweiten Tragplatte (56) erstreckt.

6. Satellitenträger nach einem der Ansprüche 1 bis 5, **dadurch gekennzeichnet, dass** jede rohrförmige Drehführungsachse (74) aus Stahl ist, dass die axiale Länge jeder rohrförmigen Drehführungsachse zwischen 5 und 20 mm enthalten ist, dass der Außendurchmesser jeder rohrförmigen Drehführungsachse zwischen 5 und 15 mm enthalten ist, und dass die radiale Dicke jeder rohrförmigen Drehführungsachse zwischen 0,5 und 2 mm enthalten ist.

7. Satellitenträger nach Anspruch 6, **dadurch gekennzeichnet, dass** die axiale Länge jeder rohrförmigen Drehführungsachse zwischen 12 und 18 mm enthalten ist, dass der Außendurchmesser jeder rohrförmigen Drehführungsachse zwischen 7 und 10 mm enthalten ist, und dass die radiale Dicke jeder rohrförmigen Drehführungsachse zwischen 0,6 und 1 mm enthalten ist.

8. Satellitenträger nach einem der vorhergehenden Ansprüche, **dadurch gekennzeichnet, dass** jede rohrförmige Drehführungsachse (74) mit einem elastisch verformbaren Element gefüllt ist.

9. Satellitenträger nach einem der Ansprüche 1 oder 2, **dadurch gekennzeichnet, dass** er vier Satelliten (52) umfasst, die angular in regelmäßiger Weise um eine Drehachse (A1) des Satellitenträgers (50) herum verteilt sind.

10. Elektromechanisches Betätigungselement (17) zur Betätigung einer Parkbremse eines Automobilfahrzeugs, das ein Betätigungselementgehäuse (18) umfasst, in dem wenigstens teilweise untergebracht sind:
- ein Elektromotor, umfassend eine Ausgangsmotorwelle; und
- einen Getriebereduziermechanismus, der durch die Motorausgangswelle zur Drehung angetrieben wird, um ein Ausgangsorgan (64) des Betätigungselements zur Drehung anzutreiben,
und **dadurch gekennzeichnet, dass** der Reduziermechanismus wenigstens eine Reduzierstufe umfasst, die einen Umlaufgetriebezug mit einem Satellitenträger (50) nach einem der Ansprüche 1 bis 9 umfasst.

11. Elektromechanisches Betätigungselement nach Anspruch 10, **dadurch gekennzeichnet, dass** der Satellitenträger (50) das Ausgangsorgan des Betätigungselements bildet.

12. Elektromechanisches Betätigungselement nach Anspruch 10, **dadurch gekennzeichnet, dass** eine Drehachse (A1) des Satellitenträgers (50) radial bezüglich einer Drehachse (A2) der Motorausgangswelle versetzt ist.

13. Verfahren zum Zusammenbauen eines Satellitenträgers für einen Umlaufgetriebezug eines Reduziermechanismus eines elektromechanischen Betätigungselements zur Betätigung einer Parkbremse eines Automobilfahrzeugs, der Planetenräder (52) umfasst, von denen jedes
- zwischen zwei parallelen Tragplatten (56, 58) untergebracht ist, die zu einer Armatur (54) des Satellitenträgers gehören;
- und drehbar an dem Satellitenträger um eine rohrförmige Drehführungsachse (74) herum montiert ist, die zwischen den zwei Tragplatten montiert ist, mit denen sie durch ihre zwei entgegengesetzten axialen Enden verbunden ist,
**dadurch gekennzeichnet, dass** es die folgenden sukzessiven Schritte umfasst:
- Realisieren der Armatur (54) des Satellitenträgers durch Formen aus Kunststoffmaterial;
- Einbringen wenigstens eines Satelliten (52) zwischen die zwei Tragplatten (56, 58);
- axiales Einsetzen einer rohrförmigen Drehführungsachse sukzessive durch eine erste von den zwei Tragplatten, den Satelliten und die zweite von den zwei Tragplatten hindurch;
- axiales Immobilisieren der rohrförmigen Drehführungsachse (74) bezüglich der zwei Tragplatten (56, 58).

14. Verfahren zum Zusammenbauen nach Anspruch 13 eines Satellitenträgers, von dem jede rohrförmige Drehführungsachse (74):
- sich axial durch die zwei Tragplatten (56, 58) hindurch erstreckt;
- ein erstes axiales Ende umfasst, das mit einem radialen Anschlagkragen (76) ausgestattet ist, der in axialer Anlage gegen einen gegenüberliegenden Bereich der Außenfläche (78) einer ersten (58) von den zwei Tragplatten (56, 58) ist; und
- ein zweites axiales Ende (82) umfasst, das axial bezüglich der zweiten (56) von den zwei Tragplatten immobilisiert ist,
wobei er Schritt des axialen Einsetzens damit endet, dass der radiale Anschlagkragen (76) in Anlage gelangt gegen den gegenüberliegenden Bereich der Außenfläche (78) der ersten Tragplatte (58).

15. Verfahren zum Zusammenbauen nach Anspruch 14, **dadurch gekennzeichnet, dass** der Schritt der Immobilisierung darin besteht, das zweite axiale Ende (82) der rohrförmigen Drehführungsachse (74) bezüglich der zweiten Tragplatte (56) zu immobilisieren durch Pressen wenigstens eines Bereichs (84) dieses zweiten axialen Endes (82) radial nach außen gegenüber einem gegenüberliegenden Bereich der Außenfläche (80) der zweiten Tragplatte.

16. Verfahren zum Zusammenbauen einer Bremse eines Automobilfahrzeugs, **dadurch gekennzeichnet, dass** es die folgenden Schritte umfasst:
- Zusammenbauen eines Satellitenträgers (50) gemäß dem Verfahren nach einem der Ansprüche 13 bis 15;
- Realisieren eines elektromechanischen Betätigungselements (17) nach einem der Ansprüche 10 bis 12, umfassend einen derart zusammengebauten Satellitenträger;
- Befestigen des derart realisierten elektromechanischen Betätigungselements (17) an einer Rückfläche eines Sattels (12) einer Scheibenbremse (10), umfassend eine Parkbremse mit elektromechanischer Betätigung.

## Claims

1. A planet carrier (50) for a planetary gear train of a reducing mechanism of an electromechanical actuator (18) for actuating a parking brake of a motor vehicle, which planet carrier carries planet pinions (52), each of which:
- is accommodated between two parallel support plates (56, 58) belonging to a frame (54) of the planet carrier;
- and is mounted rotatably on the planet carrier (50) about a rotation guide pin (74) that is mounted between the two support plates (56, 58) to which it is linked by the two opposite axial ends thereof, each rotation guide pin (74) is a tubular pin,
**characterized in that** the frame (54) is a frame produced by plastics material molding.

2. The planet carrier as claimed in claim 1, **characterized in that** the frame (54) is a frame produced by molding in a number of parts.

3. The planet carrier as claimed in claim 1 or 2, **characterized in that** each rotation guide pin (74):
- extends axially through the two support plates (56, 58);
- comprises a first axial end equipped with a radial stop collar (76), which bears axially against a portion opposite (76) the outer face (78) of a first (58) of the two support plates; and
- comprises a second axial end (82), which is axially immobilized in relation to the second (56) of the two support plates,.

4. The planet carrier as claimed in claim 3, **characterized in that** the second axial end (82) is axially immobilized in relation to the second support plate (56) by at least one crimped zone (84) of this second axial end (82), which extends radially outwardly facing a portion opposite (80) the outer face of the second support plate (56).

5. The planet carrier as claimed in claim 3 or 4, **characterized in that** the second axial end (82) is axially immobilized in relation to the second support plate (56) by at least two crimped zones (84), which are diametrically opposed, of the second axial end (82), each of which extends radially outwardly facing a portion opposite (80) the outer face of the second support plate (56).

6. The planet carrier as claimed in one of claims 1 to 5, **characterized in that** each tubular rotation guide pin (74) is made of steel, **in that** the axial length of each tubular rotation guide pin is between 5 and 20 mm, **in that** the outer diameter of each tubular rotation guide pin is between 5 and 15 mm, and **in that** the radial thickness of each tubular rotation guide pin is between 0.5 and 2 mm.

7. The planet carrier as claimed in claim 6, **characterized in that** the axial length of each tubular rotation guide pin is between 12 and 18 mm, **in that** the outer diameter of each tubular rotation guide pin is between 7 and 10 mm, and **in that** the radial thickness of each tubular rotation guide pin is between 0.6 and 1 mm.

8. The planet carrier as claimed in any one of the preceding claims, **characterized in that** each tubular rotation guide pin (74) is filled with an elastically deformable element.

9. The planet carrier as claimed in one of claims 1 or 2, **characterized in that** it comprises four planets (52) angularly distributed regularly about an axis of rotation (A1) of the planet carrier (50).

10. An electromechanical actuator (17) for actuating a parking brake of a motor vehicle, which actuator comprises an actuator casing (18) in which the following are accommodated, at least in part:
- an electric motor comprising an output motor shaft; and
- a geared reducing mechanism, which is driven in rotation by the output shaft of the motor so as to drive in rotation an output element (64) of the actuator,
and **characterized in that** the reducing mechanism comprises at least one reduction stage comprising a planetary gear train having a planet carrier (50) as claimed in any one of the claims 1 to 9.

11. The electromechanical actuator as claimed in claim 10, **characterized in that** the planet carrier (50) constitutes the output element of the actuator.

12. The electromechanical actuator as claimed in claim 10, **characterized in that** an axis of rotation (A1) of the planet carrier (50) is radially offset in relation to an axis of rotation (A2) of the output shaft of the motor.

13. A method for assembling a planet carrier, for a planetary gear train of a reducing mechanism of an electromechanical actuator for actuating a parking brake of a motor vehicle, which planet carrier carries planet pinions (52), each of which
- is accommodated between two parallel support plates (56, 58) belonging to a frame (54) of the planet carrier;
- and is mounted rotatably on the planet carrier about a tubular rotation guide pin (74) that is mounted between the two support plates to which it is linked by the two opposite axial ends thereof, this guide pin (74) extending axially through the two support plates (56, 58),
**characterized in that** said method comprises the steps of:
- producing said frame (54) by plastics material molding.

14. Method for assembling according to claim 13, of a planet carrier for which each rotation guide pin (74):
- extends axially through the two support plates (56, 58),
- comprises a first axial end equipped with a radial stop collar (76), which bears axially against the portion opposite (78) the outer face of the first support plate (58);and a second axial end (82), and
- comprises a second axial end (82) which is axially immobilized in relation to the second (56) of the two support plates,
the axial inserting step ends when the radial stop collar (76) bears axially against the portion opposite (78) the outer face of the first support plate (58).

15. Method for assembling according to claim 14, **characterized in that** the immobilizing step comprises immobilizing the second axial end (82) tubular rotation guide pin (74) in relation to the second support plate (56), by crimping at least one portion (84) of this second axial end (82), radially outwardly facing the outer face (80) of the second support plate.

16. A method for assembling a motor vehicle brake, **characterized in that** said method comprises the steps of:
- assembling a planet carrier (50) in accordance with the method in any one of claims 13 to 15;
- producing an electromechanical actuator (17) as claimed in any one of claims 10 to 12 comprising a planet carrier assembled in this way;
- fixing said electromechanical actuator (17) thus produced on a rear face of a caliper (12) of a disk brake (10) comprising an electromechanically actuated parking brake.
